# EUROPÄISCHE PATENTANMELDUNG

(11) **EP 0 952 067 A2**
(43) Veröffentlichungstag der Anmeldung: **27.10.1999**
(21) Anmeldenummer: 99104031.2
(22) Anmeldetag: 15.03.1999
(51) Int. Cl.: B62D 25/04

(54) **Karosseriesäule, insbesondere B-Säule, für ein Kraftfahrzeug**

(30) Priorität: 23.04.1998 DE 19818260
(71) Anmelder: Volkswagen Aktiengesellschaft, 38436 Wolfsburg (DE)
(72) Erfinder: Siegmund, Axel, Dipl.-Ing., 38518 Gifhorn (DE); Jandt, Thomas, Dipl.-Ing., 38102 Braunschweig (DE)

(57) **Zusammenfassung**

Die Erfindung betrifft eine Karosseriesäule (1), insbesondere B-Säule, für ein Kraftfahrzeug. Zur Erleichterung der Montage von notwendigen Bauteilen, wie beispielsweise einer Gurtführung oder eines Schließbügels, an bzw. in die Karosseriesäule (1) ist diese auf einer ihrer Längsseiten im wesentlichen über ihre gesamte Länge offen. So ergibt sich eine optimale Zugänglichkeit in das Innere der Karosseriesäule (1), was zur Reduzierung der Montage- und Herstellkosten beiträgt.

## Beschreibung

Die Erfindung betrifft eine Karosseriesäule, insbesondere B-Säule, für ein Kraftfahrzeug.

Es ist üblich, an bzw. in die Karosseriesäule eines Kraftfahrzeugs, insbesondere der B-Säule, Bauteile, wie zum Beispiel Gurtführungen oder Schließbügel für die Türen, zu montieren. Die Montage derartiger Bauteile wird aber durch die Unzugänglichkeit der bekannten im wesentlichen geschlossenen, als Hohlprofil ausgebildeten Karosseriesäulen stark erschwert.

Der vorliegenden Erfindung liegt daher die Aufgabe zugrunde, eine Karosseriesäule, insbesondere B-Säule, für ein Kraftfahrzeug bereitzustellen, welche eine leichtere Montage weiterer Bauteile an bzw. in dieselbe ermöglicht.

Diese Aufgabe wird durch die Merkmale des Hauptanspruchs gelöst. Gemäß der Erfindung ist vorgesehen, daß die Karosseriesäule auf einer ihrer Längsseiten im wesentlichen über ihre gesamte Länge offen ist. Somit wird eine optimale Zugänglichkeit in das Innere der Karosseriesäule erreicht, was eine leichtere Montage weiterer Bauteile an bzw. in die Karosseriesäule ermöglicht. Des weiteren wird die Herstellung der Karosseriesäule selbst dadurch vereinfacht. Die offene Längsseite der Karosseriesäule ist im in eine Kraftfahrzeugkarosseriestruktur integrierten Zustand bevorzugt dem Innenraum (d. h. dem Fahrgastraum) des Kraftfahrzeugs zugewandt.

Ist die Karosseriesäule zweckmäßigerweise im Querschnitt im wesentlichen U-förmig ausgebildet, so ergeben sich ein vergleichsweise großer Innenraum zur Unterbringung von weiteren Bauteilen und geeignete Montageflächen für die Bauteile.

Gemäß einer sinnvollen Ausgestaltung des Erfindungsgedankens ist eine Abdeckung für die offene Längsseite der Karosseriesäule vorgesehen. In der bevorzugten, dem Innenraum des Kraftfahrzeuges zugewandten Orientierung der offenen Längsseite der Karosseriesäule ist diese Abdeckung dann entsprechend auf der Innenraumseite der Karosseriesäule angeordnet. Die Abdeckung ist zweckmäßigerweise (insbesondere aus Gründen der Unfallsicherheit und der einfachen Montage) aus flexiblem Material. Vorteilhaft ist, wenn die Abdeckung mit der Karosseriesäule verrastbar ist. Auf diese Weise wird eine Verletzungsgefahr für die Fahrzeuginsassen vermindert und darüber hinaus eine ansprechende Optik erzielt. Durch die Flexibilität und die Verrastbarkeit kann die Abdeckung bei Bedart schnell demontiert bzw. montiert werden.

Um einem gewissen Steifigkeitsverlust entgegenzuwirken, ist die Karosseriesäule vorteilhafterweise mit Versteifungsmitteln versehen.

Die Karosseriesäule weist im unteren Bereich eine Verjüngung auf, die als Anschlag dienen kann, wenn die Karosseriesäule von oben in einen entsprechend geformten unteren Säulenknoten gesteckt wird.

Zur Reduzierung der Bauteilevielfalt kann zweckmäßigerweise in das Innere der Karosseriesäule eine Anbindung für eine obere Gurtumlenkung und/oder für eine Gurthöhenverstelleinrichtung eingeformt sein. Dieser Anbindungsbereich weist besonders hohe Steifigkeit auf, wenn die Anbindung kegelstumpfförmig ausgebildet und/oder mit Versteifungselementen versehen ist.

Es ist empfehlenswert, die Karosseriesäule im Druckgußverfahren aus Aluminium, Magnesium, Aluminiumlegierungen oder Magnesiumlegierungen herzustellen, da dieses Verfahren eine sehr rationelle und genaue Herstellung der erforderlichen geometrischen Formen erlaubt ohne das Erfordernis nennenswerter Nacharbeit. Selbstverständlich ist aber auch eine Herstellung aus anderen Materialien, wie z. B. Stahlblech (z. B. im Tiefziehverfahren), (z. B. faserverstärkten) Kunststoffen usw. möglich, wobei auch Techniken wie tailored-blank- oder Patchwork-Technik zum Einsatz kommen können.

Die Erfindung wird nun anhand eines bevorzugten Ausführungsbeispiels unter Bezugnahme auf die beiliegenden Figuren näher erläutert. Dabei zeigen
- Fig. 1: eine perspektivische Ansicht der erfindungsgemäßen Karosseriesäule;
- Fig. 2: einen Querschnitt durch die erfindungsgemäße Karosseriesäule gemäß Schnittverlauf II in Fig. 1.

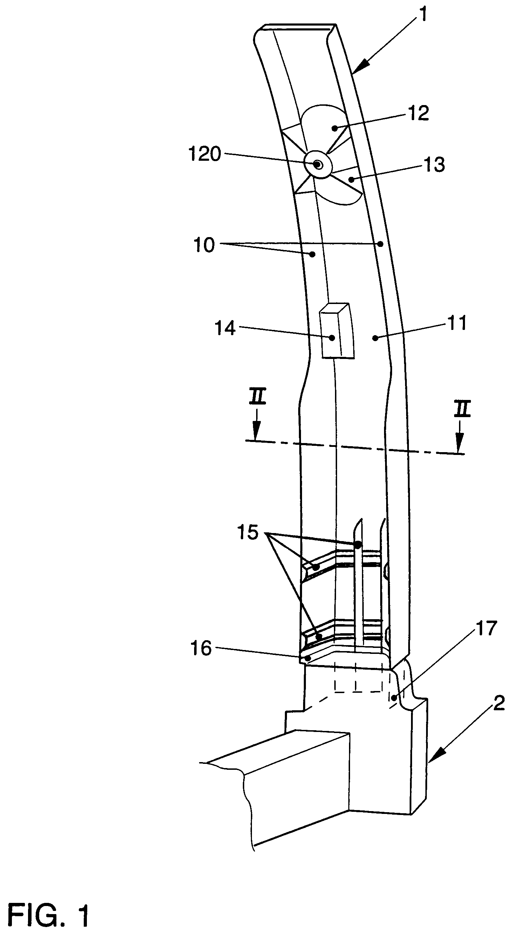

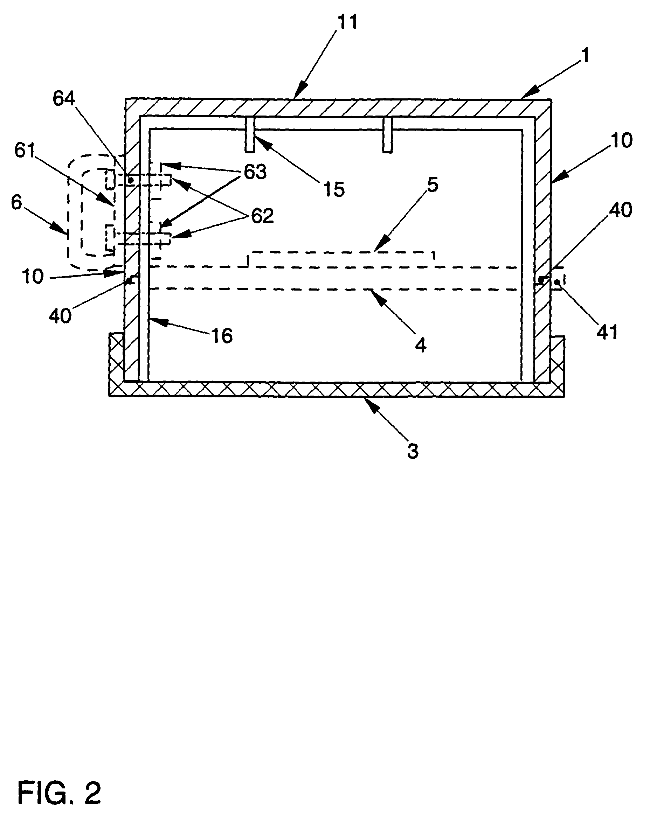

Zunächst wird auf Fig.1 Bezug genommen. Dort ist eine B-Säule 1 eines Kraftfahrzeugs ersichtlich. Die B-Säule 1 ist in ihrem Längsverlauf leicht zu einem nicht dargestellten Innenraum des Kraftfahrzeugs gekrümmt und weist im Querschnitt im wesentlichen eine U-Form, bestehend aus einer Rückwand 11 und zwei Seitenwänden 10, auf. Sie ist also im wesentlichen über ihre gesamte Länge zum Innenraum des Kraftfahrzeugs offen. Durch diese Öffnung wird die Zugänglichkeit in das Innere der B-Säule 1 erheblich erhöht und Raum für die Unterbringung notwendiger Bauteile, wie zum Beispiel einer Gurtführung frei. Durch die wesentlich erhöhte Zugänglichkeit wird eine Montage von Bauteilen in bzw. an die B-Säule 1 erheblich erleichtert, wie anhand von Fig. 2 noch erläutert wird.

Im oberen Bereich der B-Säule 1 ist eine kegelstumpfförmige Anbindung 12 für eine nicht gezeigte obere Gurtumlenkung vorgesehen. Deren Befestigung kann durch Verschraubung in ein Gewinde 120 in der Anbindung 12 bewerkstelligt werden. Durch zusätzlich angeformte Versteifungsrippen 13 und entsprechende Materialverstärkung wird die Steifigkeit in diesem Bereich erhöht. Unterhalb der Anbindung 12 ist ein nach innen weisender, quaderförmiger Montageflansch 14 vorgesehen, der durch das vorliegende Fertigungsumfeld erforderlich sein kann und ebenfalls in die B-Säule 1 mit eingeformt ist. Im unteren Bereich der B-Säule 1 sind Versteifungsrippen 15 ersichtlich, die im Innern der Rückwand 11, und zwar in Längs- und/oder Querrichtung der B-Säule 1, angeformt sind.

Die B-Säule 1 weist im unteren Bereich eine Verjüngung 16 auf, so daß sich ein verjüngtes unteres Ende 17 der B-Säule 1 ergibt. Das gestrichelt angedeutete, untere Ende 17 kann somit unter Anschlag in einen entsprechend geformten unteren B-Säulenknoten 2 eingesteckt werden.

Die B-Säule 1 ist vorzugsweise im Druckgußverfahren, beispielsweise aus Magnesium, Aluminium oder Stahl hergestellt. Dieses Verfahren erlaubt eine sehr rationelle und genaue Herstellung der erforderlichen geometrischen Formen ohne das Erfordernis nennenswerter Nacharbeit.

Anhand von Fig. 2 wird die U-Form der B-Säule 1, bestehend aus der Rückwand 11 und den Seitenwänden 10, besonders deutlich. Zwar sind auch andere Querschnittsformen denkbar, doch ist die U-Form sehr vorteilhaft, da so ein vergleichsweise großer Innenraum und geeignete Montageflächen bereitgestellt werden. An der Rückwand 11 sind die angeformten Versteifungsrippen 15 erkennbar und die sich über den Querschnitt erstreckende Verjüngung 16, die als Anschlag für den B-Säulenknoten 2 dient.

Es ist leicht nachvollziehbar, daß, bedingt durch die Öffnung der B-Säule 1, eine Montage von evtl. erforderlichen Bauteilen an und in die B-Säule 1 sehr leicht und bequem möglich ist. So ist beispielsweise ein Schließbügel 6 mit einer Schließbügelplatte 61 gestrichelt angedeutet. Zu dessen Montage an der B-Säule 1 wird die Schließbügelplatte 61 mit dem darauf aufgenieteten eigentlichen Schließbügel auf die (in Fig. 2 linke) Seitenwand 10 der B-Säule 1 aufgesetzt, und Schrauben 62 werden von außen durch entsprechende Öffnungen in der Schließbügelplatte 61 und durch geeignete Öffnungen 64 in der Seitenwand 10 hindurchgesteckt. Die Schrauben 62 können dann unter optimaler visueller Kontrolle mit Muttern 63 verschraubt werden, die in an sich bekannter Weise in sogenannten Mutternkäfigen im Innern der B-Säule 1 vorgesehen sein können. Ferner besteht zum Beispiel auch in höchst einfacher Weise die Möglichkeit, eine Gurtführung 4 für einen Gurt 5 im Innern der B-Säule 1 zu montieren. Wie ebenfalls nur gestrichelt angedeutet, kann die stabförmig ausgebildete Gurtführung 4 zum Beispiel mittels in deren Stirnseiten eingreifende und durch geeignete Öffnungen 40 hindurchragende Schrauben 41 zwischen den Seitenwänden 10 befestigt werden. Eine weitere Vereinfachung der Montage der Gurtführung 4 würde sich dann ergeben, wenn diese in ihrer Länge gegen eine Federvorspannung veränderlich wäre und beispielsweise in der Art eines Uhrenarmbandstegs ausgeführt wäre. In diesem Fall könnte auf die Schrauben 41 und entsprechendes Werkzeug zum Festziehen gänzlich verzichtet werden.

Wie ferner anhand von Fig. 2 ersichtlich ist, kann eine Abdeckung 3 für die Öffnung der B-Säule 1 vorgesehen sein (in Fig. 1 nicht dargestellt), die sich im wesentlichen über die gesamte Länge der B-Säule 1 erstreckt. Diese ist zweckmäßigerweise aus flexiblem Material ausgeführt und kann vorzugsweise mittels nicht näher dargestellter Rastmittel mit der B-Säule 1 verrastet werden.

### BEZUGSZEICHENLISTE

- 1: B-Säule
- 2: B-Säulenknoten
- 3: Abdeckung für B-Säule
- 4: Gurtführung
- 5: Gurt
- 6: Schließbügel
- 10: Seitenwände
- 11: Rückwand
- 12: Anbindung für obere Gurtumlenkung
- 13: Versteifungsrippen
- 14: Montageflansch
- 15: Versteifungsrippen
- 16: Verjüngung
- 17: unteres Ende der B-Säule
- 40: Öffnungen
- 41: Schrauben
- 61: Schließbügelplatte
- 62: Schrauben
- 63: Muttern
- 64: Öffnungen

## Patentansprüche

1. Karosseriesäule (1), insbesondere B-Säule, für ein Kraftfahrzeug, dadurch gekennzeichnet, daß die Karosseriesäule (1) auf einer ihrer Längsseiten im wesentlichen über ihre gesamte Länge offen ist.

2. Karosseriesäule (1), insbesondere B-Säule, für ein Kraftfahrzeug nach Anspruch 1, dadurch gekennzeichnet, daß die Karosseriesäule (1) im Querschnitt im wesentlichen U-förmig ausgebildet ist.

3. Karosseriesäule (1), insbesondere B-Säule, für ein Kraftfahrzeug nach Anspruch 1 oder 2, dadurch gekennzeichnet, daß eine Abdeckung (3) für die Karosseriesäule (1) vorgesehen ist.

4. Karosseriesäule (1), insbesondere B-Säule, für ein Kraftfahrzeug nach Anspruch 3, dadurch gekennzeichnet, daß die Abdeckung (3) aus flexiblem Material ist.

5. Karosseriesäule (1), insbesondere B-Säule, für ein Kraftfahrzeug nach einem der Ansprüche 3 oder 4, dadurch gekennzeichnet, daß die Abdeckung (3) mit der Karosseriesäule (1) verrastbar ist.

6. Karosseriesäule (1), insbesondere B-Säule, für ein Kraftfahrzeug nach einem der Ansprüche 1 bis 5, dadurch gekennzeichnet, daß die Karosseriesäule (1) mit Versteifungsmitteln (15) versehen ist.

7. Karosseriesäule (1), insbesondere B-Säule, für ein Kraftfahrzeug nach einem der Ansprüche 1 bis 6, dadurch gekennzeichnet, daß die Karosseriesäule (1) im unteren Bereich eine Verjüngung (16) aufweist.

8. Karosseriesäule (1), insbesondere B-Säule, für ein Kraftfahrzeug nach einem der Ansprüche 1 bis 7, dadurch gekennzeichnet, daß in das Innere der Karosseriesäule (1) eine Anbindung (12) für eine obere Gurtumlenkung und/oder Aufnahmen für eine Gurthöhenverstellung eingeformt sind.

9. Karosseriesäule (1), insbesondere B-Säule, für ein Kraftfahrzeug nach Anspruch 8, dadurch gekennzeichnet, daß die Anbindung (12) kegelstumpfförmig ausgebildet und/oder mit Versteifungselementen (13) versehen ist.

10. Karosseriesäule (1), insbesondere B-Säule, für ein Kraftfahrzeug nach einem der Ansprüche 1 bis 9, dadurch gekennzeichnet, daß die Karosseriesäule (1) im Druckgußverfahren hergestellt ist.
